# EUROPEAN PATENT APPLICATION

(11) **EP 2 881 495 A1**
(43) Date of publication of application: **10.06.2015**
(21) Application number: 14195806.6
(22) Date of filing: 02.12.2014
(51) Int. Cl.: C23C 24/04, B23K 26/00, B23K 26/06, B23K 26/08, B23K 26/12, B23K 26/32, B23K 26/14

(54) **Coating method, coating system and coated article**

(30) Priority: 05.12.2013 US 201314097940
(71) Applicant: General Electric Company, Schenectady, New York 12345 (US)
(72) Inventor: Lin, Dechao, Greenville, SC South Carolina 29615 (US); Bucci, David Vincent, Greenville, SC South Carolina 29615 (US); Kottilingam, Srikanth Chandrudu, Greenville, SC South Carolina 29615 (US)
(74) Representative: Cleary, Fidelma

(57) **Abstract**

A coating method, coating system and coated article are provided. The coating method includes providing a substrate (101), directing a coating material (104) towards the substrate (101), the coating material contacting a coating region (105) of the substrate (101) to form a coating deposit (106), providing an energy source (102), and directing the energy source (102) towards a first peripheral edge portion (107) and a second peripheral edge portion (108) of the coating region (105). The directing of the energy source (102) is concurrent with the directing of the coating material (104). The coating system includes a substrate (101), a thermal spray nozzle (103) directed towards the substrate (101), and an energy source (102) directed towards the substrate (101). The energy source (102) is configured to contact only a first peripheral edge portion (107) and a second peripheral edge portion (108) of a coating region (105) of the substrate (101). The coated article includes a substrate (101), and a uniform thermal spray coating (106) mechanically bonded to the substrate (101).

## Description

### FIELD OF THE INVENTION

The present invention is directed to a coating method, a coating system and a coated article. More specifically, the present invention is directed to a hybrid spray coating method, a hybrid spray coating system, and a hybrid spray coated article.

### BACKGROUND OF THE INVENTION

Many coated articles are formed through thermal spraying of a coating material. During the thermal spraying, the coating material is directed towards a substrate at a high velocity. The coating material contacts the substrate at the high velocity, generating heat and forming a mechanical bond.

During the thermal spraying of the coating material, a peripheral portion of the spray contacts the substrate at a decreased velocity as compared to a central portion of the spray. The decreased velocity of the peripheral portion of the spray decreases the heat generated by the spray. The coating formed from the peripheral portions of the spray cools at an increased rate, causing a poor mechanical bond between the coating and the substrate at such locations.

One attempt to improve the bonding between the coating and the substrate includes a preheating of the substrate followed by thermal spraying. However, the preheating of the substrate could cause a formation of defects throughout the coating.

A coating method, coating system and coated article that do not suffer from one or more of the above drawbacks would be desirable in the art.

### BRIEF DESCRIPTION OF THE INVENTION

In an exemplary embodiment, a coating method includes providing a substrate, directing a coating material towards the substrate, the coating material contacting a coating region of the substrate to form a coating deposit, providing an energy source, and directing the energy source towards a first peripheral edge portion and a second peripheral edge portion of the coating region. The directing of the energy source is concurrent with the directing of the coating material.

In another exemplary embodiment, a coating system includes a substrate, a thermal spray nozzle directed towards the substrate, and an energy source directed towards the substrate. The energy source is configured to contact only a first peripheral edge portion and a second peripheral edge portion of a coating region of the substrate.

In another exemplary embodiment, a coated article includes a substrate, and a uniform thermal spray coating over the substrate. The thermal spray coating is bonded mechanically to the substrate at all locations of coverage with an absence of defects.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is a side view of a coating method according to an embodiment of the disclosure.
FIG. 2 is a top view of a coating method according to an embodiment of the disclosure.

Wherever possible, the same reference numbers will be used throughout the drawings to represent the same parts.

### DETAILED DESCRIPTION OF THE INVENTION

Provided are a coating method, a coating system and a coated article. Embodiments of the present disclosure, in comparison to processes and articles not using one or more of the features disclosed herein, increase bonding of a coating to a substrate, increase coating efficiency, decrease coating cost, decrease spray coating velocity, increase uniformity of the coating, remove coating defects such as cracking, or a combination thereof.

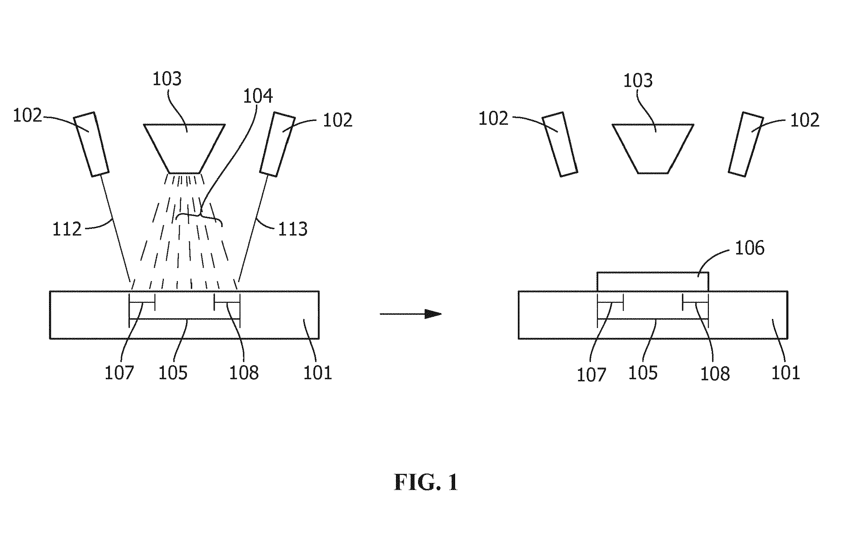

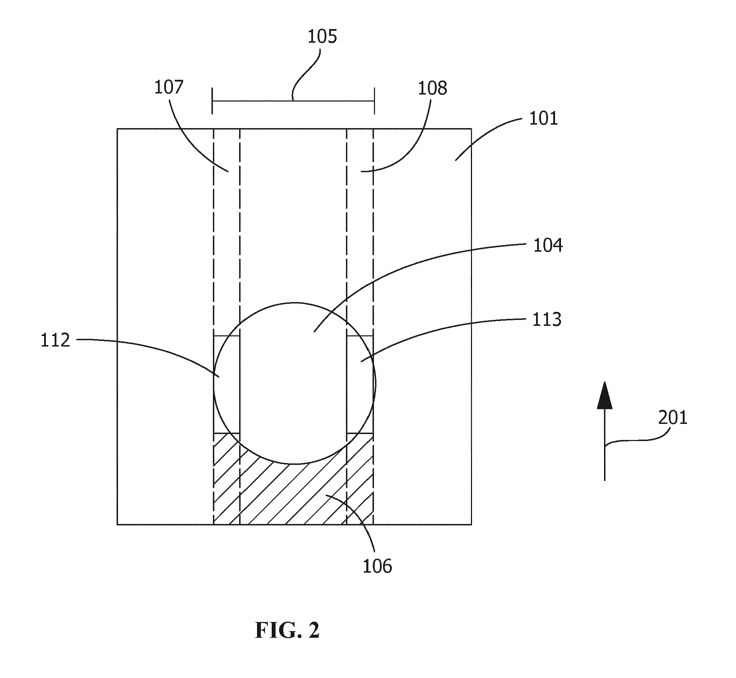

Referring to FIG. 1 and FIG. 2, in one embodiment, a coating method 100 includes providing a substrate 101, providing an energy source 102, and directing both a coating material 104 (e.g. powdered coating material) and the energy source 102 towards a coating region 105 of the substrate 101 without melting the coating material 104, the substrate 101, or the coating deposit 106. The coating material 104 contacts the substrate 101 and forms a coating deposit 106 on the substrate 101, while the energy source 102 provides heat to the substrate 101, the coating material 104, and/or the coating deposit 106 without preheating the substrate 101. The coating material 104 is directed toward the coating region 105 by any suitable application method. For example, one suitable application method includes directing the coating material 104 towards the substrate 101 by thermal spraying of the coating material 104. Thermal spraying includes, but is not limited to, vacuum plasma spraying, high velocity oxy-fuel spraying, cold spraying, other thermal spraying methods, or a combination thereof.

In one embodiment, the coating deposit 106 is formed as application of the coating material 104 and the energy source 102 proceed in a direction of travel 201. In another embodiment, the application of the coating material 104 includes directing the coating material 104 towards the substrate 101 with a thermal spray nozzle 103, which includes, but is not limited to, a cold spray nozzle. The thermal spray nozzle 103 accelerates the coating material 104 towards the substrate 101 with any suitable transport medium such as, but not limited to, nitrogen gas, non-oxidizing gas, inert gas, or a combination thereof without melting the substrate 101 or the coating material 104.

The coating material 104 includes any suitable composition for thermal spraying to form the coating deposit 106. Suitable compositions include, but are not limited to, metal matrix composites, ceramic matrix composites, high melt superalloys, bond coats such as MCrAlX, PtAl, NiAl, Pt(Ni)Al, or a combination thereof. The MCrAlX is an alloy having M selected from one or a combination of iron, nickel, cobalt, and combinations thereof; and Cr is chromium, Al is aluminum, and X is an element selected from the group of solid solution strengtheners and gamma prime formers consisting of Y, Tc, Ta, Re, Mo, and W and grain boundary strengtheners consisting of B, C, Hf, Zr, and combinations thereof.

The accelerated coating material 104 exiting the thermal spray nozzle 103 contacts the substrate 101, generating heat which facilitates a mechanical bond between the coating material 104 and the substrate 101. The mechanical bond between the coating material 104 and the substrate 101 forms the coating deposit 106. Additionally, the acceleration of the coating material 104 generates a predetermined velocity of the coating material 104 exiting the thermal spray nozzle 103. The predetermined velocity is any suitable velocity capable of generating suitable heat for forming the coating deposit 106. For example, in one embodiment, during cold spraying the predetermined velocity of the coating material 104 accelerated by the cold spray nozzle is up to about 1000 m/s. An increase or decrease in a velocity of the coating material 104 increases or decreases the heat generated by the coating material 104 contacting the substrate 101, respectively.

In one embodiment, the velocity of the coating material 104 exiting the thermal spray nozzle 103 decreases slightly towards a periphery of the coating region 105. As such, the velocity of the coating material 104 contacting the periphery of the coating region 105 is decreased as compared to the rest of the coating region 105, decreasing the heat generated in the first peripheral edge portion 107 and the second peripheral edge portion 108. In another embodiment, the conduction of heat generated by the process away from the coating region 105 increases at the periphery of the coating region 105, accelerating cooling in the first peripheral edge portion 107 and the second peripheral edge portion 108. The decreased heat generated by the decreased velocity and/or the accelerated cooling from the increased conduction cause the coating material 104 to bond to the first peripheral edge portion 107 and the second peripheral edge portion 108 at a peripheral bonding strength that is significantly reduced as compared to a non-peripheral bonding strength of the coating material in the rest of the coating region 105. For example, for a single pass, the non-peripheral bonding strength includes about 100 MPa, while the peripheral bonding strength includes, but is not limited to, up to about 90% of the non-peripheral bonding strength, between about 1% and about 90% of the non-peripheral bonding strength, between about 1% and about 80% of the non-peripheral bonding strength, between about 1% and about 50% of the non-peripheral bonding strength, between about 1% and about 25% of the non-peripheral bonding strength, between about 1% and about 10% of the non-peripheral bonding strength, between about 0.5% and about 5% of the non-peripheral bonding strength, or any combination, sub-combination, range, or sub-range thereof. The non-peripheral bonding strength may vary between different materials and applications.

Without wishing to be bound by theory, the rapid movement of the reduced heat input at the edges is believed to contribute to formation of defects such as lack of bonding and cracks. In one embodiment, to increase the amount of mechanical bonding and/or decrease cracking seen with pre-heating of the substrate 101, the energy source 102 provides additional heat to the substrate 101 along the periphery, the coating material 104, and/or the coating deposit 106.

The energy source 102 is any suitable energy source such as, but not limited to, a focused or defocused high energy beam, a diode laser, a CO₂ laser, a fiber laser, an electron beam, a disc laser, a scanning laser, or a combination thereof. In one embodiment, the scanning laser is configured to increase the heat of the coating material 104 being applied to any suitable portion of the coating region 105. In an alternate embodiment, the energy source 102 is positioned outside the thermal spray nozzle 103, in any suitable configuration for increasing the heat of the coating material 104 being applied in the first peripheral edge portion 107 and the second peripheral edge portion 108. For example, in one embodiment, a single energy source 102 provides a U-shaped beam which contacts the first peripheral edge portion 107, the second peripheral edge portion 108, and the coating deposit 106 trailing the thermal spray nozzle 103. Alternate beam shapes include any suitable shape for increasing the heat of the coating material 104 being applied in the first peripheral edge portion 107 and the second peripheral edge portion 108, such as, but not limited to, a rectangular-shaped beam, or a circular-shaped beam. In another embodiment, a plurality of energy sources 102 provides one or more split beam(s) that contact at least the first peripheral edge portion 107 and the second peripheral edge portion 108. In a further embodiment, at least two energy sources 102 provide at least one beam directed to either of the first peripheral edge portion 107 and the second peripheral edge portion 108.

In one embodiment, a first beam 112 from the energy source 102 contacts the substrate 101 and the coating material 104 in the first peripheral edge portion 107, and a second beam 113 from the energy source 102 contacts the substrate 101 and the coating material 104 in the second peripheral edge portion 108. The contacting of the energy source 102 with the first peripheral edge portion 107 and the second peripheral edge portion 108 provides heat to both the coating material 104 and the substrate 101, without preheating the substrate 101. The heat softens the first peripheral edge portion 107 and the second peripheral edge portion 108, without melting the substrate 101 or the coating material 104, to increase a mechanical bonding strength between the applied coating material 104 and the substrate 101. The single beam from the energy source 102 may be split using optics, into a first beam 112 and a second beam 113. In another embodiment, the beam from the energy source 102 may be rapidly scanned along the first peripheral edge portion 107 and the second peripheral edge portion 108 as well as, optionally, the coating deposit 106.

In one embodiment, the heat from the energy source 102 decreases a rate of cooling of the coating deposit 106, permitting an increase in the deposition rate of the coating material 104 and/or decreasing or eliminating the formation of cracks in the coating deposit 106. In another embodiment, the increased heat from the contacting of the energy source 102 with the first peripheral edge portion 107 and the second peripheral edge portion 108 permits a decrease in acceleration of the coating material 104. The energy source 102 provides any suitable amount of increased heat to replace the decreased heat from the decreased acceleration of the coating material 104, and form the coating deposit 106 having uniform or substantially uniform mechanical bonding to the substrate 101.

A density of the coating deposit 106 in the first peripheral edge portion 107 and the second peripheral edge portion 108 is locally increased by the increased heat from the energy source 102. The increased heat coalesces the coating material 104 during spraying, forming the increase in the density of the first peripheral edge portion 107 and the second peripheral edge portion 108. In one embodiment, the increase in the density of the first peripheral edge portion 107 and the second peripheral edge portion 108 forms a uniform or substantially uniform density in the applied coating deposit 106.

A positioning of the energy source 102 relative to the deposit 106, a size of a width of the beam generated by the energy source 102, a distance between two of the energy sources 102, and a power range of the energy source 102 control a width of the coating deposit 106 formed by the application of the coating material 104. The first peripheral edge portion 107 and the second peripheral edge portion 108 together are adjusted to occupy any suitable percentage of the coating region 105, such as, but not limited to, up to about 40%, between about 1% and about 40%, between about 10% and about 40%, between about 20% and about 40%, between about 10% and about 30%, or any combination, sub-combination, range, or sub-range thereof. In another embodiment, the first peripheral edge portion 107 and the second peripheral edge portion 108 are similar or substantially similar in size.

The energy source 102 generates the beam having any suitable width and any suitable length for contacting the first peripheral edge portion 107 and/or the second peripheral edge portion 108 or otherwise scans these areas. Suitable widths of the beam include, but are not limited to, up to about 5 mm, between about 0.01 mm and about 5 mm, between about 0.1 mm and about 3 mm, up to about 2 mm, or any combination, sub-combination, range, or sub-range thereof. Suitable lengths of the beam include, but are not limited to, up to about 15 mm, up to about 10 mm, between about 0.1 and about 10 mm, or any combination, sub-combination, range, or sub-range thereof. The width and the length of the beam may vary with differing conditions, such as, but not limited to, the energy source 102, the shape of the beam, or the size of the coating region 105. For example, the diode laser may produce the beam having the rectangular-shape and a width of between about 0.1 mm and about 1 mm, while the focused high energy beam may produce the beam having the circular-shape and a width of between about 0.1 mm and about 5 mm.

The power range for the energy source 102 is adjusted based upon coating properties, such as, but not limited to, thickness, speed of application, velocity of application, coating region 105 size, energy source 102 orientation, or a combination thereof. For example, in one embodiment, during cold spraying of the coating material 104 the power range for the energy source 102 includes, but is not limited to, between about 0.1 kw and about 10 kw, between about 0.1 kw and about 6 kw, between about 0.5 kw and about 6 kw, or any combination, sub-combination, range, or sub-range thereof.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A coating method (100), comprising:
providing a substrate (101);
directing a coating material (104) towards the substrate (101), the coating material (104) contacting a coating region (105) of the substrate (101) to form a coating deposit (106);
providing an energy source (102); and
directing the energy source (102) towards a first peripheral edge portion (107) and a second peripheral edge portion (108) of the coating region (105);
wherein directing of the energy source (102) is concurrent with the directing of the coating material (104).

2. The coating method of claim 1, wherein directing the coating material (104) towards the substrate (101) further comprises thermal spraying the coating material (104).

3. The coating method of claim 2, wherein thermal spraying the coating material (104) further comprises cold spraying the coating material (104).

4. The coating method of any of claims 1 to 3, wherein providing the energy source (102) further comprises:
selecting the energy source (102) from the group consisting of a focused high energy beam, a defocused high energy beam, and a laser beam;
wherein the laser beam is selected from the group consisting of a diode laser, a CO₂ laser, a fiber laser, and a disc laser.

5. The coating method of claim 4, wherein a laser energy of the laser beam (102) comprises between 0.5 kw and 6 kw and/or wherein a beam width of the laser beam (102) comprises between 0.1 mm and 5 mm.

6. The coating method of any preceding claim, further comprising directing the energy source (102) to increase a density of the coating deposit (106).

7. The coating method of any preceding claim, comprising contacting the first peripheral edge portion (107) and the second peripheral edge portion (108) with the energy source (102).

8. The coating method of claim 7, further comprising heating the coating material (104) without melting the coating material (104).

9. The coating method of any preceding claim, wherein providing the energy source (102) further comprises providing a first energy source (112) and a second energy source (113) and further comprising contacting the first peripheral edge portion (107) with the first energy source (112) and the second peripheral edge portion (108) with the second energy source (113).

10. The coating method of claim 9, further comprising adjusting a spacing between the first energy source (112) and the second energy source (113) to control a width of the coating deposit (106).

11. A coating system, comprising:
a substrate (101);
a thermal spray nozzle (103) directed towards the substrate (101); and
an energy source (102) directed towards the substrate (101);
wherein the energy source (102) is configured to contact only a first peripheral edge portion (107) and a second peripheral edge portion (108) of a coating region (105) of the substrate (101).

12. The coating system of claim 11, wherein the thermal spray nozzle (103) comprises a cold spray nozzle and/or wherein the energy source (112) comprises a first energy source and a second energy source (113).

13. The coating system of claim 11 or 12, wherein the first peripheral edge portion (107) and the second peripheral edge portion (108) comprise up to 40% of the coating region (105) and/or the first peripheral edge portion size (107) is equal to the second peripheral edge portion (108) size.

14. A coated article, comprising:
a substrate (101); and
a uniform thermal spray coating over the substrate (101);
wherein the thermal spray coating is bonded mechanically to the substrate (101) at all locations of coverage with an absence of defects by performing the method of any of claims 1 to 10.
